# EUROPÄISCHE PATENTSCHRIFT

(11) **EP 2 441 599 B1**
(45) Veröffentlichungstag und Bekanntmachung des Hinweises auf die Patenterteilung: **24.07.2013**
(21) Anmeldenummer: 11184686.1
(22) Anmeldetag: 11.10.2011
(51) Int. Cl.: B60C 27/08, F16G 15/04

(54) **Verbindungselement für Ketten, insbesondere für Reifenketten**
Connecting element for chains, in particular for tyre chains
Elément de raccordement pour chaînes, en particulier pour chaînes de pneus

(30) Priorität: 13.10.2010 DE 102010048200
(43) Veröffentlichungstag der Anmeldung: 18.04.2012
(73) Patentinhaber: RUD Ketten Rieger & Dietz GmbH u. Co. KG, 73432 Aalen (DE)
(72) Erfinder: Kaiser, Helmut, 73457 Aalen-Essingen (DE); Schmidle, Reinhold, 73432 Aalen (DE)
(74) Vertreter: Grünecker, Kinkeldey, Stockmair & Schwanhäusser

(56) Entgegenhaltungen:
- DE-A1- 3 701 111
- JP-U- 60 058 949

## Beschreibung

Die Erfindung betrifft ein an eine Kette anschließbares Verbindungselement zur Verbindung mit einem weiteren Verbindungselement, vorzugsweise einem identisch ausgestalteten weiteren Verbindungselement, mit zwei eine Aufnahmeöffnung begrenzenden Haltebögen, die jeweils einen an einem in die Aufnahmeöffnung mündenden Einführschlitz angrenzenden Führungsabschnitt und einen die Aufnahmeöffnung in oder entgegen einer Lastrichtung begrenzenden Halteabschnitt aufweisen.

Verbindungselemente der oben genannten Art sind aus dem Stand der Technik z.B aus der DE 3 701 111 A1 oder der JP 60 058 949 U bekannt. Ferner zeigt die DE 25 338 38 C2 Verbindungselemente für eine Reifenkette, die jeweils unverlierbar mit einem Endglied verbunden sind. An die Einführschlitze grenzen Führungsabschnitte, die mit Keilflächen versehen sind. Die Keilflächen sind X-förmig angeordnet und erlauben somit ein Einfügen der Verbindungselemente, sofern diese in einem Winkel von etwa 90° zueinander angeordnet sind. Somit kann der Einführschlitz sehr klein gehalten werden, um die Wahrscheinlichkeit eines unbeabsichtigten Lösens der Verbindungselemente zu verringern. Um des Weiteren ein unbeabsichtigtes Herausfallen eines eingesetzten Endgliedes zu vermeiden, ist gegenüber dem Einführschlitz ein Sicherungsfortsatz angeordnet, der das Endglied gegen Verrutschen sichert.

Wird das Verbindungselement beispielsweise für eine Reifenkette verwendet, sind die Kettenstränge möglichst kurz zu halten, um einen sicheren Halt der Reifenkette auf dem Fahrzeugrad zu gewährleisten. Da die Buge des Verbindungselements aufgrund der im Betrieb auftretenden Biegemomente einen gegenüber den angeschlossenen Kettengliedern deutlich vergrößerten Querschnitt aufweisen, ist es erforderlich, die Kettenglieder zum Einsetzen in das Verbindungselement quer auf den entsprechenden Haltebug aufzusetzen, so dass der Haltebug trotz seines großen Querschnitts in die lichte Weite des Kettengliedes eingeführt werden kann.

Folglich muss das Kettenglied zum Einhängen in das Verbindungselement gegenüber einer Zugrichtung der angeschlossenen Kette abgewinkelt oder verkippt werden. Um das Kettenglied verkippen zu können, muss der Kettenstrang durch Ziehen in Richtung des Verbindungselementes verlagert werden, bis die für das Verkippen erforderliche Länge zur Verfügung steht. Diese Verlagerung des Kettenstranges ist aufgrund der möglichst kurz zu haltenden Kette beschwerlich. Ein Nachteil der aus dem Stand der Technik bekannten Verbindungselemente ist somit ihre beschwerliche Montage.

Folglich liegt der Erfindung die Aufgabe zugrunde, ein Verbindungselement zu schaffen, das einfach und mit geringem Kraftaufwand montiert werden kann.

Diese Aufgabe wird erfindungsgemäß für ein Verbindungselement der eingangs genannten Art dadurch gelöst, dass wenigstens einer der Haltebuge einen zwischen Halteabschnitt und Führungsabschnitt angeordneten Einschwenkabschnitt umfasst, in dessen Bereich eine Umfangsfläche des Verbindungselementes in Richtung der Aufnahmeöffnung versetzt ist.

Der erfindungsgemäße Einschwenkabschnitt erleichtert ein Einschwenken eines Kettengliedes, wobei eine Mittenebene des Kettengliedes zum Einsetzen in das Verbindungselement deutlich weniger von einer Lastebene des Verbindungselements, in der das Kettenglied bei Zugbeanspruchung im Einsatz liegt, abgewinkelt werden muss. Somit ist die für das Einsetzen in das Verbindungselement erforderliche Verkürzung der anzuschließenden Kette deutlich verringert und insbesondere bei unter Spannung stehenden Ketten die Montage des Verbindungselements deutlich vereinfacht.

Das erfindungsgemäße Verbindungselement kann durch verschiedene, voneinander unabhängige, jeweils für sich vorteilhafte Ausgestaltungen weiter entwickelt werden. Auf diese Ausgestaltungen und die mit den Ausgestaltungen jeweils verbundenen Vorteile wird im Folgenden kurz eingegangen.

Gemäß einer ersten vorteilhaften Ausgestaltung eines erfindungsgemäßen Verbindungselements kann der Versatz der Umfangsfläche von einer Abflachung gebildet sein. Die Abflachung kann eine im Wesentlichen ebene Fläche aufweisen.

Der Einschwenkabschnitt kann an einer der Aufnahmeöffnung abgewandten Seite eine Abflachung aufweisen, entlang derer der Querschnitt des Haltebuges verringert ist. Eine derartige Abflachung oder Verringerung des Querschnitts bietet den Vorteil, dass das in das Verbindungselement einzuhängende Kettenglied zum Einhängen noch weniger von der Lastebene entfernt und die Kette weniger gelängt werden muss.

Der Einschwenkabschnitt kann einen gegenüber den Halteabschnitten verringerten Querschnitt aufweisen. Zwischen dem Einschwenkabschnitt und dem Führungsabschnitt oder zwischen der Abflachung und dem Führungsabschnitt kann des Weiteren eine Verrundung vorgesehen sein, die eine Gleitbewegung des einzusetzenden Kettengliedes über die Abflachung in Richtung des Einführschlitzes vereinfacht.

Die Abflachung kann in Lastrichtung oder parallel zu einer Lastebene verlaufen. Die Lastebene des Verbindungselements ist die Ebene, auf der im Betrieb die Vektoren der Lastrichtung oder der Zugkräfte der angeschlossenen Ketten liegen oder in der das angeschlossene Kettenglied bei Einleitung einer Zugkraft zum Liegen kommt. Die Lastebene verläuft somit im Wesentlichen quer zu den Haltebugen des Verbindungselements.

In einer weiteren vorteilhaften Ausgestaltung kann die Abflachung schräg in Richtung der Lastebene und in Lastrichtung verlaufen. Beispielsweise kann die Abflachung von dem Einführschlitz weg in Richtung der Lastebene verlaufen. Der Winkel zwischen der Lastebene und der Abflachung kann etwa 20 bis 30 Grad betragen.

Gemäß einer weiteren vorteilhaften Ausgestaltung kann der mit der Abflachung versehene Haltebug an einer der Aufnahmeöffnung abgewandten Seite zwischen Einschwenkabschnitt und Halteabschnitt mit einer Stufe versehen sein, entlang derer sich der Querschnitt des Haltebuges in Richtung des Halteabschnitts vergrößert. Die Stufe kann zum Auflegen eines einzuhängenden Kettengliedes ausgestaltet sein, um das Einsetzen des Kettengliedes in das Verbindungselement zu vereinfachen. Beispielsweise kann ein Ende oder ein Bug des Kettengliedes auf die Stufe aufgelegt werden, um anschließend das andere Ende oder den anderen Bug in den Einführschlitz zu schwenken.

In einer weiteren vorteilhaften Ausgestaltung eines erfindungsgemäßen Verbindungselementes kann der wenigstens eine Haltebug an seinem dem Einführschlitz zugewandten Ende mit einer Verdickung versehen sein. Durch die Verdickung kann der Haltebug in einer parallel zur Lastebene verlaufenden Richtung verbreitert sein. Die Verdickung kann sich zu beiden Seiten des Einschwenkabschnittes oder lediglich zu einer Seite, bevorzugt der Seite, zu der sich der Einführschlitz hin weitet, erstrecken. Der Querschnitt der Verdickung kann rechteckig oder quadratisch ausgestaltet sein. Die Verdickung verhindert, dass ein in den Einführschlitz eingesetztes weiteres Verbindungselement aufgrund seines Spiels fälschlicherweise in den zur Aufnahme der anzuschließenden Kette vorgesehenen Abschnitt gelangt.

Ferner kann an einer der Aufnahmeöffnung abgewandten Seite des Haltebuges unterhalb der Stufe und in Richtung des Einführschlitzes ein vergrößerter Radius vorgesehen sein, um eine selbsthemmende Auflage des aufgesetzten Kettengliedes zu schaffen und eine selbsttätige Verschiebung eines in das Verbindungselement eingesetzten Kettengliedes in Richtung des Einführschlitzes zu hemmen. Zudem ist durch die Stufe ein größerer Dickenunterschied zwischen Halteabschnitt und Einschwenkabschnitt möglich, durch welchen die Festigkeit des Halteabschnitts vergrößert ist.

Um das Einsetzen eines weiteren Verbindungselementes in das Verbindungselement nur bei einer vorbestimmten Ausrichtung der Verbindungselemente zueinander zu ermöglichen und somit die Sicherheit gegen unbeabsichtigtes Lösen zu erhöhen, kann sich der Querschnitt wenigstens eines Führungsabschnitts in Richtung des Einführschlitzes verringern. Diese Querschnittsverjüngung kann vorzugsweise derart ausgestaltet sein, dass Führungsflächen an Führungsabschnitten zweier Verbindungselemente parallel zueinander und/oder aneinander anliegend positioniert werden können, um die Verbindungselemente ineinander einzuführen. Die Haltebuge weisen hingegen vorzugsweise eine Dicke auf, die größer ist als die größte lichte Weite des Einführschlitzes. Nach dem Einsetzen eines Verbindungselements in ein weiteres Verbindungselement können die Verbindungselemente verschwenkt werden, so dass Abschnitte größeren Querschnitts im Bereich des Einführschlitzes zu liegen kommen, die aufgrund ihrer Dicke ein Herausrutschen durch den Einführschlitz blockieren.

In einer weiteren vorteilhaften Ausgestaltung des Verbindungselementes kann, um ein Ineinandereinsetzen von Verbindungselementen nur in einer einzigen vorbestimmten relativen Position zu ermöglichen und ein Verdrehen angeschlossener Kettenstränge zu vermeiden, wenigstens ein Führungsabschnitt vorzugsweise nur einseitig mit einer auf den Einführschlitz zulaufenden Führungsfläche versehen sein. Der Einführschlitz oder Führungsabschnitt eines weiteren Verbindungselements kann identisch ausgestaltet sein, um ein Einführen eines Verbindungselements nur in einer Position zu ermöglichen, in der die Führungsflächen im Wesentlichen parallel zueinander angeordnet sind.

Der Haltebug, der zur Aufnahme eines Kettengliedes oder eines Anschlussgliedes einer Kette dient, kann einen Führungsabschnitt mit einer Führungsfläche aufweisen, die ausgehend von dem Einschwenkabschnitt in Richtung des Einführschlitzes und in Richtung der Lastebene verläuft. Somit ist das Einsetzen eines Kettengliedes bei weitest möglich geschlossener Umgrenzung eines zur Aufnahme eines Kettengliedes vorgesehenen Anschlussabschnittes vereinfacht. Zwischen der Lastebene und der Führungsfläche kann ein Winkel zwischen etwa 30° und etwa 60°, vorzugsweise um die 30°, 45° oder 60°, vorgesehen sein. Alternativ kann ein Winkel von etwa 90° oder etwa 80° vorgesehen sein.

Um ein Verrutschen, Verkeilen oder Verklanken eines in das Verbindungselement eingesetzten Endgliedes einer Kette oder eines weiteren Verbindungselements zu vermeiden, kann die Aufnahmeöffnung einen Anschlussabschnitt zur Aufnahme eines Anschlussgliedes eine Kette und einen Kupplungsabschnitt zur Aufnahme eines weiteren Verbindungselements aufweisen, wobei sich ein Sicherungsfortsatz zwischen Anschlussabschnitt und Kupplungsabschnitt in die Aufnahmeöffnung erstreckt. Der Sicherungsfortsatz kann eine Barriere zwischen Anschlussabschnitt und Kupplungsabschnitt bilden.

Der Sicherungsfortsatz kann sich in Richtung des Einführschlitzes erstrecken und einen Einführspalt zwischen Einführschlitz und Kupplungsabschnitt und/oder zwischen Einführschlitz und Anschlussabschnitt begrenzen. Der Sicherungsfortsatz kann auf einer dem Einführschlitz gegenüberliegenden Seite der Aufnahmeöffnung angeordnet sein. Der Sicherungsfortsatz bildet somit eine Verliersicherung für ein in den Anschlussabschnitt eingesetztes Kettenglied oder Anschlussglied und/oder ein in den Kupplungsabschnitt eingesetztes weiteres Verbindungselement.

Gemäß einer weiteren vorteilhaften Ausgestaltung eines erfindungsgemäßen Verbindungselements kann der Sicherungsfortsatz mit einer dem Kupplungsabschnitt zugewandten Schrägfläche versehen sein. Die Schrägfläche kann als Führungsfläche für ein einsetzbares weiteres Verbindungselement und insbesondere für den Kupplungsabschnitt des weiteren Verbindungselementes ausgestaltet sein. Vorzugsweise verläuft die Schrägfläche des Sicherungsfortsatzes in Richtung des Kupplungsabschnitts, um ein Einführen eines weiteren Verbindungselements in den Kupplungsabschnitt zu vereinfachen. Die Schrägfläche kann parallel zu wenigstens einer der Führungsflächen der Führungsabschnitte verlaufen und somit mit der wenigstens einen Führungsfläche einen Einführkanal für das Verbindungselement bilden. Zwischen einer Mittenebene des Verbindungselementes und der Schrägfläche kann ein Winkel zwischen etwa 30° und 60°, vorzugsweise um 45°, eingeschlossen sein.

Um das Verbindungselement möglichst flach zu gestalten und eine Auflage für das Verbindungselement zu bilden, beispielsweise zur Positionierung des Verbindungselementes auf der Lauffläche eines Fahrzeugrades, kann zwischen den Haltebugen ein Längsschenkel angeordnet sein. Der Längsschenkel kann sich geradlinig zwischen den Haltebugen erstrecken.

Zur Verbesserung der Verschleißfestigkeit und/oder Standzeit des Verbindungselementes kann der Längsschenkel mit einer gehärteten Verschleißfläche versehen sein. Der Längsschenkel kann ferner Verbreiterungen oder Verdickungen aufweisen, die über die für eine Mindestfestigkeit des Verbindungselements erforderliche Breite oder Dicke hinausgehen. Die Verbreiterungen oder Verdickungen können sich im Wesentlichen parallel zur Lastebene oder quer zur den Haltebugen erstrecken.

Um die Zuverlässigkeit einer Verbindung zweier Verbindungselemente zu erhöhen, können die Führungsflächen der Führungsabschnitte eine Einführeinrichtung oder einen Einführkanal definieren oder begrenzen, die oder der von dem Einführschlitz in Richtung des Kupplungsabschnitts verläuft. Somit kann der Einführschlitz auf einer Seite des Kupplungsabschnitts angeordnet sein, die von einer Last oder Zugrichtung des Verbindungselements weg weist. Somit können sich auch bei einem unbeabsichtigten Verdrehen eines eingesetzten Verbindungselements die zwei miteinander verbundenen Verbindungselemente, wenigstens unter Zugbelastung, nicht selbsttätig lösen.

Im Folgenden wird die Erfindung anhand unterschiedlicher Ausführungsformen mit Bezug auf die Figuren beispielhaft erläutert. Dabei stellen die verschiedenen Ausführungsformen lediglich mögliche Ausgestaltungen dar, die für den jeweiligen Anwendungsfall modifiziert werden können. Einzelne, für sich vorteilhafte Merkmale können gemäß der obigen Beschreibung der vorteilhaften Ausgestaltungen bei der jeweils beschriebenen Ausführungsform hinzugefügt oder weggelassen werden.

Es zeigen:
- Fig. 1: eine schematische perspektivische Darstellung eines ersten Ausführungsbeispiels der Erfindung;
- Fig. 2: eine schematische Draufsicht des Ausführungsbeispiels der Fig. 1 beim Zusammenfügen mit einem weiteren Verbindungselement;
- Fig. 3: eine schematische Seitenansicht eines zweiten Ausführungsbeispiels der Erfindung;
- Fig. 4: eine schematische Draufsicht des Ausführungsbeispiels der Fig. 3;
- Fig. 5: eine schematische Draufsicht auf ein drittes Ausführungsbeispiel der Erfindung.

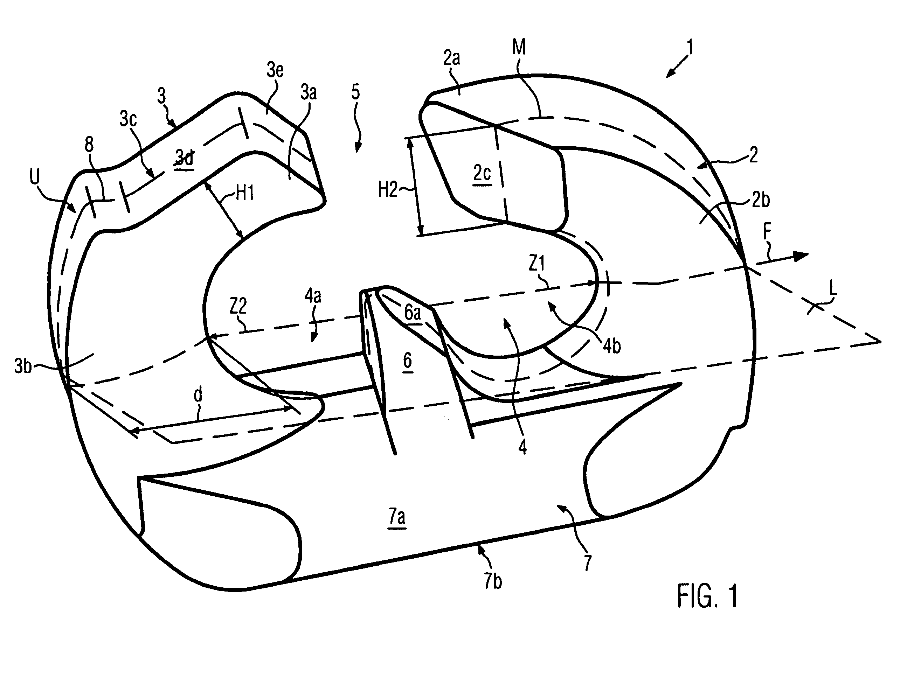

Zunächst wird der Aufbau eines erfindungsgemäßen Verbindungselements mit Bezug auf das Ausführungsbeispiel der Fig. 1 beschrieben.

Das Verbindungselement 1 ist mit zwei Haltebugen 2, 3 versehen, die eine Aufnahmeöffnung 4 begrenzen. In die Aufnahmeöffnung 4 mündet ein Einführschlitz 5, an welchen Führungsabschnitte 3a, 2a der Haltebuge 2, 3 angrenzen.

Die Haltebuge 2, 3 umgeben jeweils Abschnitte der Aufnahmeöffnung 4. Sie sind jeweils hakenartig ausgestaltet, wobei die Hakenmäuler aufeinander zu weisen. Die Haltebuge 2, 3 weisen Halteabschnitte 2b, 3b auf, die der Aufnahme von Zugkräften Z1, Z2 dienen. Die Zugkräfte Z1, Z2 verlaufen in und entgegen einer Lastrichtung F. Die Zugkräfte Z1, Z2 können auf einer Lastebene L liegen, auf der beim Einsatz des Verbindungselementes auch ein unter Zugbelastung befindliches Kettenglied angeordnet sein kann. Entsprechend können die Halteabschnitte 2b, 3b für eine erhöhte Festigkeit des Verbindungselementes 1 im Bereich der Lastebene L und auf den vom Einführschlitz 5 abgewandten Seiten der Haltebuge 2, 3 verdickt sein.

Der Haltebug 3 umfasst des Weiteren einen Einschwenkabschnitt 3c, der sich zwischen Führungsabschnitt 3a und Halteabschnitt 3b erstreckt und gegenüber dem Halteabschnitt 3b einen verringerten Querschnitt aufweist. Die Höhe H1 des Einschwenkabschnittes 3c, die dem Abstand einer Umfangsfläche U von der Aufnahmeöffnung 4 entspricht, ist in Richtung der Aufnahmeöffnung 4 gegenüber der Dicke d des Halteabschnittes 2b, 3b und gegenüber der Höhe H2 des Führungsabschnittes 2a verringert.

Die Umfangsfläche U des Verbindungselementes 1, die von der der Aufnahmeöffnung 4 abgewandten Außenfläche des Verbindungselementes 1 gebildet ist, ist im Bereich des Einschwenkabschnittes 3c in Richtung der Aufnahmeöffnung 4 und insbesondere in Richtung des Anschlussabschnittes 4a versetzt. Der Einschwenkabschnitt 3c bildet einen im Wesentlichen ebenen Abschnitt der Umfangsfläche U. Somit kann ein Kettenglied auch bei nur geringfügiger Verlagerung einer anzuschließenden Kette oder einer geringfügigen Abwinklung des Kettengliedes gegenüber der Lastebene L in die Aufnahme 4 eingeschwenkt werden.

Zur gleichzeitigen Aufnahme eines Kettengliedes und eines weiteren Verbindungselementes ist die Aufnahmeöffnung 4 in einen Anschlussabschnitt 4a zur Aufnahme eines Kettengliedes und einen Kupplungsabschnitt 4b zur Aufnahme eines Verbindungselementes unterteilt. Zwischen dem Anschlussabschnitt 4a und dem Kupplungsabschnitt 4b ist ein Sicherungsfortsatz 6 angeordnet, der ein Verrutschen eines in den Kupplungsabschnitt 4b aufgenommenen Verbindungselementes in den Anschlussabschnitt 4a oder eines in den Anschlussabschnitt 4a aufgenommenen Anschlussgliedes einer Kette in den Kupplungsabschnitt 4b verhindert. Der Sicherungsfortsatz 6 erstreckt sich in Richtung des Einführschlitzes 5 und ist auf einem Längsschenkel 7 des Verbindungselementes 1 positioniert, der die Haltebuge 2 und 3 vorzugsweise in Richtung der Zugkräfte Z1 und Z2 oder der Lastebene L verbindet.

Der Längsschenkel 7 ist auf gegenüberliegenden Seiten des Verbindungselementes 1 mit Verbreiterungen 7a versehen, die auf einer Außenseite des Verbindungselementes 1 eine verbreiterte Auflagefläche 7b bilden. Aufgrund seiner massiven, verdickten Ausgestaltung weist der Längsschenkel 7 eine hohe Verschleißbeständigkeit auf. Er ist somit für eine Anordnung auf einer der Reifenlauffläche eines Fahrzeugrades abgewandeten Seite einer Reifenkette geeignet, auf der aufgrund des Kontaktes mit der Fahrbahn eine erhöhte Verschleißbeanspruchung auftreten kann.

Der Einschwenkabschnitt 3c ist an einer der Aufnahmeöffnung abgewandten Seite mit einer Abflachung 3d versehen, entlang derer der Querschnitt des Haltebuges verringert ist. Insbesondere die Höhe des Querschnittes ist im Bereich der Abflachung verringert. Durch die Abflachung 3d ist somit die Außenfläche des Verbindungselementes 1 in Richtung der Aufnahmeöffnung 4 versetzt. Im Bereich der Abflachung 3d kann auch ein nahezu parallel zur Lastebene L auf den Einschwenkabschnitt 3c aufgesetztes Kettenglied in den Anschlussabschnitt 4a eingeschwenkt werden. Die Abmessungen der Abflachung 3d oder des Einschwenkabschnittes 3c können vorzugsweise an die Abmessungen wenigstens eines standardisierten oder handelsüblichen Kettengliedes oder Anschlussgliedes angepasst sein.

Um eine Verschiebung eines eingesetzten Kettengliedes in Richtung des Anschlussabschnittes 4a zu vereinfachen, verläuft die Abflachung 3d ausgehend von dem Einführschlitz 5 schräg in Richtung der Lastebene L. Die Abflachung 3d endet an einer Stufe 8, die einen Übergang zwischen Einschwenkabschnitt 3c und Halteabschnitt 3b bildet. Entlang der Stufe 8 vergrößert sich der Querschnitt des Haltebuges 3 in Richtung des Halteabschnittes 3b deutlich. Somit ist eine hohe Festigkeit des Halteabschnittes 3b im Bereich der Lastebene L gewährleistet. Ferner kann die Stufe 8 zum Auflegen eines Kettengliedes dienen, bevor dieses in den Einführschlitz 5 eingeschwenkt wird.

Der Führungsabschnitt 2a ist mit einer Führungsfläche 2c zur Führung eines einsetzbaren weiteren Verbindungselementes ausgestaltet. Die Führungsfläche 2c kann als Keilfläche ausgestaltet sein, wobei sich der Führungsabschnitt 2a in Richtung des Einführschlitzes 5 zuspitzt. Zudem kann sich die Führungsfläche 2c schräg zur Lastebene und schräg zu einer senkrecht zur Lastebene L verlaufenden Mittenebene M erstrecken. Die Führungsfläche 2c kann mit der Mittenebene M einen Winkel von etwa 45° oder etwa 30° bilden. Zwischen der Führungsfläche 2c und der Lastebene L kann ein Winkel von 10 bis 45°, vorzugweise von etwa 15° vorgesehen sein.

Die Führungsfläche 2c kann ein aufgesetztes Verbindungselement in Richtung des Kupplungsabschnittes 4b führen, indem sie schräg zur Richtung der Zugkraft Z1 in Richtung des Kupplungsabschnittes 4b verläuft. Somit entsteht bei gekuppelten Verbindungselementen eine schräge Führungsfläche 2c, die bei einem auf der Führungsfläche 2c aufliegenden Verbindungselement und bei Zugbelastung ein Verrutschen in die Aufnahmeöffnung 4 bewirkt.

Beide Führungsabschnitte 2a, 3a verjüngen sich in Richtung des Einführschlitzes 5. Vorzugsweise ist die Dicke des Halteabschnittes 2b größer als die lichte Weite des Einführschlitzes 5. Somit kann der Halteabschnitt 2b eines weiteren Verbindungselementes in den Kupplungsabschnitt 4b eingeführt werden, sofern Führungsflächen 2c der Verbindungselemente parallel zueinander ausgerichtet sind. Anschließend können die Haltebuge 2 ineinander verdreht werden, bis das zweite Verbindungselement in der Lastebene L liegt. Auf diese Weise blockiert der Haltebug 2b des weiteren Verbindungselementes aufgrund seiner Dicke den Einführschlitz 5 und die Verbindung ist gegen unbeabsichtigtes Lösen gesichert.

Der Führungsabschnitt 3a ist mit einer Führungsfläche 3e ausgestattet, die sich in Richtung des Kupplungsabschnittes 4b erstreckt. Die Führungsfläche 3e verläuft ausgehend von dem Einschwenkabschnitt 3c in Richtung des Einführschlitzes 5 und in Richtung der Lastebene L. Somit ist das Einsetzen eines Kettengliedes bei weitest möglich geschlossener Umgrenzung des Anschlussabschnittes 4a vereinfacht. Zwischen der Lastebene L und der Führungsfläche 3e kann ein Winkel zwischen etwa 80° und etwa 60°, gezeigt sind um die 45°, vorgesehen sein.

Zusammen mit der Führungsfläche 2c führt die Führungsfläche 3e somit ein in den Einführschlitz 5 eingesetztes weiteres Verbindungselement in Richtung des Kupplungsabschnittes 4b.

Der Sicherungsfortsatz 6 ist mit einer Schrägfläche 6a versehen, die sich in Richtung des Kupplungsabschnittes 4b erstreckt. Die Schrägfläche 6a bildet eine weitere Führungsfläche, die ein in das Verbindungselement 1 einzusetzendes weiteres Verbindungselement in den Kupplungsabschnitt 4b führt. Zusammen mit den Führungsflächen 3e und 2c bildet die Schrägfläche 6a einen Einführkanal für ein einzusetzendes Verbindungselement, der sich schräg zur Richtung der Zugkraft Z1 in Richtung des Kupplungsabschnittes 4b erstreckt. Der Winkel zwischen der Mittenebene des Verbindungselements 1 und der Schrägfläche 6a beträgt zwischen 30° und 60°, gezeigt sind um die 45°.

Der Sicherungsfortsatz 6 ist an den Längsschenkel 7 gegenüber des Einführschlitzes 5 angeordnet. Somit ist der Einführschlitz 5 entgegen der Richtung der Zugkraft Z1 gegenüber dem Kupplungsabschnitt 4b versetzt angeordnet. Zum Lösen eines eingesetzten Verbindungselementes muss dieses folglich nicht nur für eine fluchtende Ausrichtung der Einführschlitze verdreht und senkrecht zur Lastebene bewegt, sondern auch entgegen der Richtung der Zugkraft Z1 verschoben werden.

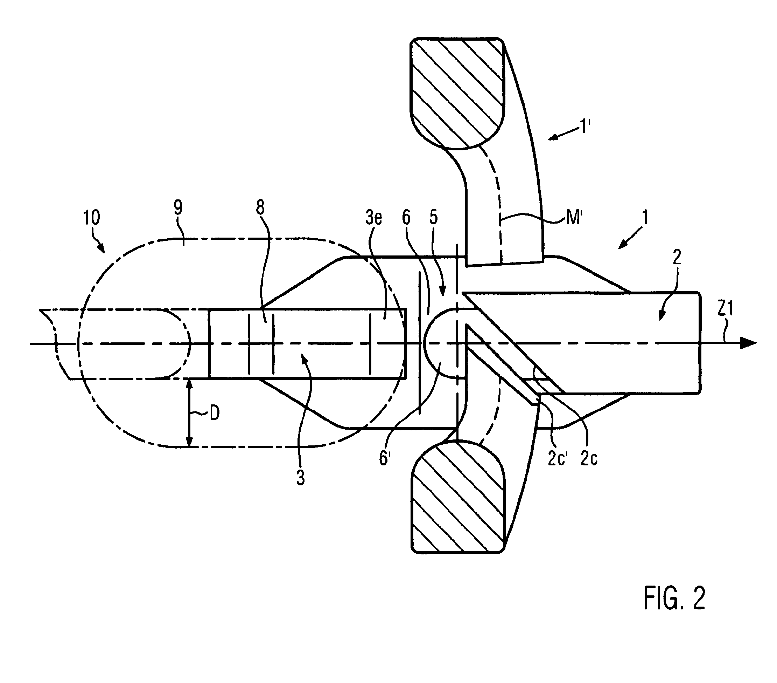

Fig. 2 zeigt zwei Verbindungselemente 1,1' beim Zusammenfügen. Das Verbindungselement 1 kann für Reifenketten, beispielsweise für Gleitschutzketten, verwendet werden, die mindestens einen teilbaren Kettenstrang aufweisen. So können zwei gleichartige oder identische Verbindungselemente 1, 1' an einer Teilungsstelle eines Kettenstrangs angeordnet sein, wobei jedes der Verbindungselemente jeweils durch einen Anschlussabschnitt 4a mit einem Anschlussglied 9 eines Kettenstrangs verbunden sind.

Die Verbindungselemente 1 und 1' können identisch ausgestaltet sein oder wenigstens identisch ausgestaltete Führungsabschnitte aufweisen. Zum Einführen des Verbindungselementes 1' in den Kupplungsabschnitt des Verbindungselementes 1 werden die Führungsflächen 2c und 2c' der Verbindungselemente 1, 1' parallel zueinander ausgerichtet. In dieser Position sind das Verbindungselement 1' und seine Mittenebene M' aufgrund des schrägen Verlaufs der Führungsflächen 2c, 2c' schräg zum Verbindungselement 1 und schräg zur in Fig. 1 gezeigte Lastebene L des Verbindungselementes 1 positioniert. Das Verbindungselement 1' kann somit schräg und in Richtung der Zugkraft Z1 in den Kupplungsabschnitt des Verbindungselementes 1 eingeführt werden.

In dem von dem Haltebug 3 umgebenden Anschlussabschnitt 4a ist ein als Anschlussglied 9 verwendetes Kettenglied einer Kette 10 aufgenommen. Die Mittenebene des Anschlussgliedes 9 liegt im montierten Zustand der Kette 10 auf der in Fig. 1 gezeigten Lastebene L des Verbindungselementes 1. Die Dicke D eines Längsschenkels des Anschlussgliedes 9 ist deutlich geringer als die Dicke d des Halteabschnittes 3b im Bereich der Lastebene L. Beispielsweise kann die Dicke d des Halteabschnittes 3b etwa doppelt so groß sein wie die Dicke D eines Längsschenkels des Anschlussgliedes 9. Somit ist auch bei starker Zugbeanspruchung des Verbindungselementes 1 ein Versagen des Verbindungselementes 1 ausgeschlossen.

Im Sinne einer größtmöglichen Festigkeit des Verbindungselementes 1 kann die maximale lichte Weite der Aufnahmeöffnung 4 in Richtung der Lastebene L etwa 3 bis 3,5-fach so groß wie die Dicke D der Schenkel eines Anschlussgliedes 9 sein.

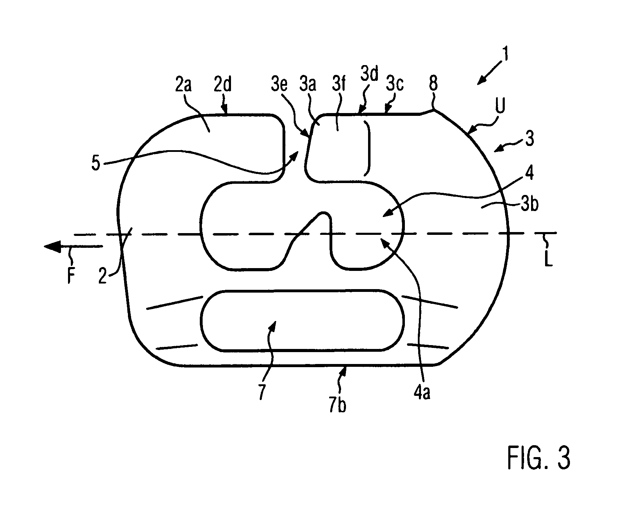

Fig. 3 zeigt eine schematische Seitenansicht eines zweiten Ausführungsbeispiels eines erfindungsgemäßen Verbindungselementes, wobei für Elemente, die in Funktion und Aufbau den Elementen des Ausführungsbeispiels der Figuren 1 und 2 entsprechen, dieselben Bezugszeichen verwendet werden. Der Kürze halber wird auf die Unterschiede zum Ausführungsbeispiel der Figuren 1 und 2 eingegangen.

Wie bei dem ersten Ausführungsbeispiel weist der Haltebug 3 des Verbindungselementes 1 einen Einschwenkabschnitt 3c auf, der sich zwischen einem Führungsabschnitt 3a und einem Halteabschnitt 3b erstreckt. Die Umfangsfläche U des Verbindungselementes 1 ist im Bereich des Einschwenkabschnittes 3c in Richtung des Anschlussabschnittes 4a der Aufnahmeöffnung 4 versetzt. Die somit entstehende Abflachung 3d des Haltebuges 3 verläuft parallel zur Auflagefläche 7b des Längsschenkels 7. Des Weiteren fluchtet die Abflachung 3d mit einem Abschnitt 2d der Umfangsfläche U an dem Führungsabschnitt 2a des Haltebuges 2.

An seinem dem Einführschlitz 5 zugewandten Ende weist der Haltebug 3 bzw. der Einschwenkabschnitt 3c des Haltebuges 3 eine Verdickung 3f auf. Die Verdickung erstreckt sich zu beiden Seiten des Einschwenkabschnitts 3c und quer zur Lastrichtung F. Für in den Anschlussabschnitt 4a der Aufnahmeöffnung 4 aufgenommene Kettenglieder bildet die Verdickung 3f somit einen Anschlag, der ein selbsttätiges Schwenken eines Kettengliedes in Richtung des Einführschlitzes 5 behindert und somit die Gefahr eines unbeabsichtigten Lösens oder Herausgleitens des Kettengliedes verringert.

Im Gegensatz zu Ausführungsbeispiel der Figuren 1 und 2 ist zwischen der Lastebene L und der Führungsfläche 3e ein Winkel von etwa 80° vorgesehen.

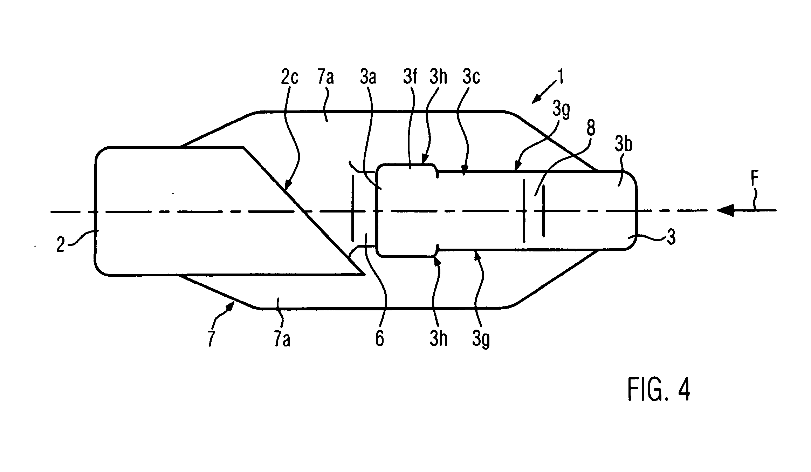

Fig. 4 ist eine schematische Draufsicht des zweiten Ausführungsbeispiels eines Verbindungselementes 1.

Die Verdickung 3f hat in der Draufsicht, also in einer Ebene parallel zur Mittenebene einen im Wesentlichen rechteckigen Querschnitt. Der Haltebug 2 ist quer zur Lastrichtung F gegenüber dem Haltebug 3 deutlich breiter ausgestaltet. Somit wird trotz der in Fig. 3 gezeigten geringeren Dicke des Haltebuges 2 in Lastrichtung F, insbesondere im Bereich der Lastebene L, ein ähnlich großer Querschnitt und somit eine etwa gleich große Festigkeit der Haltebuge 2, 3 erreicht.

Die Verdickung 3f erstreckt sich quer zur Lastrichtung F zu beiden Seiten des Einschwenkabschnittes 3c. Somit weisen die Flankenflächen 3g des Haltebuges 3 jeweils Stufen 3h auf, die einen Anschlag für ein auf einer Flankenfläche 3g aufliegendes Kettenglied bilden. Die Verdickung 3f verhindert ferner, dass ein in den Einführschlitz 5 ein gesetztes Verbindungselement 1' fälschlicherweise in den Anschlussabschnitt 4a rutschen kann.

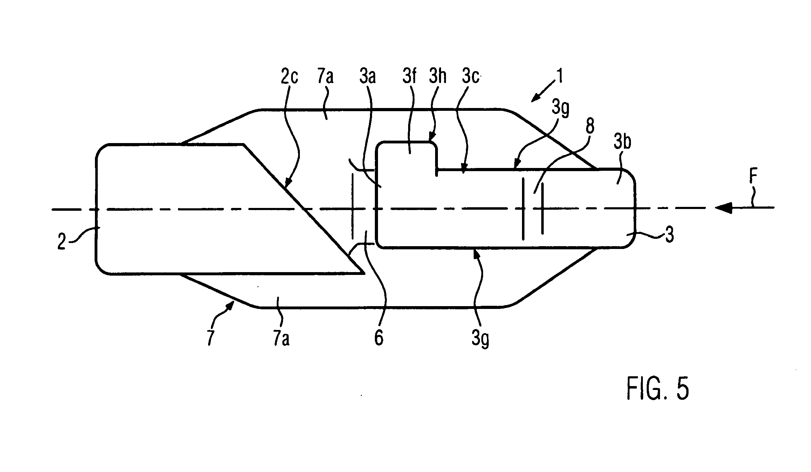

Figur 5 zeigt eine schematische Draufsicht eines dritten Ausführungsbeispiels eines Verbindungselementes 1.

Dieses Ausführungsbeispiel weist ebenfalls eine Verdickung 3f auf, die im Unterschied zum Ausführungsbeispiel der Figur 3 und 4 jedoch nicht auf beiden Seiten gegenüber dem Haltebug 2, sondern nur zu einer Seite hin vorspringt. Vorzugsweise ist dies die Seite, zu der sich der Einführschlitz 5 hin erweitert.

Die Verdickung 3f ist bei den Ausführungsbeispielen der Figuren 3 bis 5 breiter als die lichte Weite der Aufnahmeöffnung 4, so dass der Haltebug 3 nicht aufgenommen werden kann.

## Patentansprüche

1. An eine Kette (10) anschließbares Verbindungselement (1, 1') zur Verbindung mit einem weiteren Verbindungselement (1, 1') in einer einzigen relativen Position, mit zwei eine Aufnahmeöffnung (4) begrenzenden Haltebugen (2, 3), die jeweils einen an einen in die Aufnahmeöffnung (4) mündenden Einführschlitz (5) angrenzenden Führungsabschnitt (3a, 4a) und einen die Aufnahmeöffnung (4) in oder entgegen einer Lastrichtung (F) begrenzenden Halteabschnitt (2b, 3b) aufweisen, **dadurch gekennzeichnet, dass** wenigstens einer der Haltebuge (2, 3) einen zwischen Halteabschnitt (2b, 3b) und Führungsabschnitt (2a, 3a) angeordneten Einschwenkabschnitt (3c) umfasst, in dessen Bereich eine Umfangsfläche (U) des Verbindungselementes (1, 1'), die von einer der Aufnahmeöffnung abgewandten Außenfläche des Verbindungselements (1, 1') gebildet ist, in Richtung der Aufnahmeöffnung versetzt ist.

2. Verbindungselement (1, 1') nach Anspruch 1, **dadurch gekennzeichnet, dass** der Einschwenkabschnitt (3c) an einer der Aufnahmeöffnung (4) abgewandten Seite eine Abflachung (3d) aufweist

3. Verbindungselement (1, 1') nach Anspruch 2, **dadurch gekennzeichnet, dass** der Querschnitt des Haltebuges (2, 3) entlang der Abflachung (3d) verringert ist.

4. Verbindungselement (1, 1') nach Anspruch 2 oder 3, **dadurch gekennzeichnet, dass** die Abflachung (3d) von dem Einführschlitz (5) weg parallel zu einer Lastebene (L) verläuft.

5. Verbindungselement (1, 1') nach Anspruch 2 oder 3, **dadurch gekennzeichnet, dass** die Abflachung (3d) von dem Einführschlitz (5) weg schräg in Richtung einer Lastebene (L) verläuft.

6. Verbindungselement (1, 1') nach einem der Ansprüche 1 bis 5, **dadurch gekennzeichnet, dass** der wenigstens eine Haltebug (3) an einer der Aufnahmeöffnung (4) abgewandten Seite zwischen Einschwenkabschnitt (3c) und Halteabschnitt (3b) mit einer Stufe (8) versehen ist, entlang derer sich der Querschnitt des Haltebuges (3) in Richtung des Halteabschnittes (3b) vergrößert.

7. Verbindungselement (1, 1') nach einem der Ansprüche 1 bis 6, **dadurch gekennzeichnet, dass** der wenigstens eine Haltebug (3) an seinem dem Einführschlitz (5) zugewandten Ende mit einer Verdickung (3f) versehen ist.

8. Verbindungselement (1, 1') nach einem der Ansprüche 1 bis 7, **dadurch gekennzeichnet, dass** sich der Querschnitt wenigstens eines Führungsabschnittes (2a, 3a) in Richtung des Einführschlitzes (5) verjüngt.

9. Verbindungselement (1, 1') nach einem der Ansprüche 1 bis 8, **dadurch gekennzeichnet, dass** wenigstens ein Führungsabschnitt (2a, 3a) einseitig mit einer auf den Einführschlitz (5) zulaufenden Führungsfläche (2c, 2c', 3e) versehen ist.

10. Verbindungselement (1, 1') nach Anspruch 9, **dadurch gekennzeichnet, dass** die Führungsfläche (3e) des Führungsabschnittes (3a) mit der Lastebene (L) einen Winkel von etwa 45° einschließt.

11. Verbindungselement (1, 1') nach einem der Ansprüche 1 bis 10, **dadurch gekennzeichnet, dass** die Aufnahmeöffnung (4) einen Anschlussabschnitt (4a) zur Aufnahme eines Anschlussgliedes (9) einer Kette (10) und einen Kupplungsabschnitt (4b) zur Aufnahme eines weiteren Verbindungselementes (1, 1') aufweist, wobei sich ein Sicherungsfortsatz (6) zwischen Anschlussabschnitt (4a) und Kupplungsabschnitt (4b) in die Aufnahmeöffnung (4) erstreckt.

12. Verbindungselement (1,1') nach Anspruch 11, **dadurch gekennzeichnet, dass** der Sicherungsfortsatz (6) mit einer dem Kupplungsabschnitt (4b) zugewandten Schrägfläche (6a) versehen ist.

13. Verbindungselement (1, 1') nach einem der Ansprüche 1 bis 12, **dadurch gekennzeichnet, dass** zwischen den Haltebugen (2, 3) ein Längsschenkel (7) angeordnet ist.

14. Verbindungselement (1, 1') nach einem der Ansprüche 11 bis 13, **dadurch gekennzeichnet, dass** der Sicherungsfortsatz (6) an dem Längsschenkel (7) angeordnet ist.

15. Verbindungselement (1, 1') nach einem der Ansprüche 13 oder 14, **dadurch gekennzeichnet, dass** der Längsschenkel (7) eine gegenüber den Halteabschnitten (2b, 3b) verbreiterte Auflagefläche (7b) bildet.

## Claims

1. Connecting element (1, 1') which can be connected to a chain (10) for connection to a further connecting element (1, 1') in a single relative position, comprising two retaining bows (2, 3) delimiting a receiving opening (4), the retaining bows (2, 3) each comprising a guiding section (3a, 4a) adjoining an insertion slot (5) opening into the receiving opening (4), and a retaining section (2b, 3b) delimiting the receiving opening (4) in or counter to a load direction (F), **characterised in that** at least one of the retaining bows (2, 3) comprises a swivelling section (3c), arranged between retaining section (2b, 3b) and guiding section (2a, 3a), in the region of which a peripheral surface (U) of the connecting element (1, 1'), which is formed by an outer face of the connecting element (1, 1') which faces away from the receiving opening, is offset in the direction of the receiving opening.

2. Connecting element (1, 1') according to claim 1, **characterised in that** the swivelling section (3c) comprises a flattened portion (3d) on a side facing away from the receiving opening (4).

3. Connecting element (1, 1') according to claim 2, **characterised in that** the cross-section of the retaining bow (2, 3) is reduced along the flattened portion (3d).

4. Connecting element (1, 1') according to claim 2 or 3, **characterised in that** the flattened portion (3d) runs away from the insertion slot (5) parallel to a load plane (L).

5. Connecting element (1, 1') according to claim 2 or 3, **characterised in that** the flattened portion (3d) runs away from the insertion slot (5) obliquely in the direction of a load plane (L).

6. Connecting element (1, 1') according to any one of claims 1 to 5, **characterised in that** the at least one retaining bow (3) is provided on a side facing away from the receiving opening (4) between swivelling section (3c) and retaining section (3b) with a step (8), along which the cross-section of the retaining bow (3) enlarges in the direction of the retaining section (3b).

7. Connecting element (1, 1') according to any one of claims 1 to 6, **characterised in that** the at least one retaining bow (3) is provided with a thickened portion (3f) on its end facing the insertion slot (5).

8. Connecting element (1, 1') according to any one of claims 1 to 7, **characterised in that** the cross-section of at least one guiding section (2a, 3a) tapers in the direction of the insertion slot (5).

9. Connecting element (1, 1') according to any one of claims 1 to 8, **characterised in that** at least one guiding section (2a, 3a) is provided on one side with a guiding surface (2c, 2c', 3e) running towards the insertion slot (5).

10. Connecting element (1, 1') according to claim 9, **characterised in that** the guiding surface (3e) of the guiding section (3a) encloses an angle of about 45° with the load plane (L).

11. Connecting element (1, 1') according to any one of claims 1 to 10, **characterised in that** the receiving opening (4) comprises a connecting section (4a) for receiving a connecting member (9) of a chain (10) and a coupling section (4b) for receiving a further connecting element (1, 1'), wherein a securing projection (6) extends into the receiving opening (4) between connecting section (4a) and coupling section (4b).

12. Connecting element (1, 1') according to claim 11, **characterised in that** the securing projection (6) is provided with an inclined face (6a) facing the coupling section (4b).

13. Connecting element (1, 1') according to any one of claims 1 to 12, **characterised in that** an elongate leg (7) is arranged between the retaining bows (2, 3).

14. Connecting element (1, 1') according to any one of claims 11 to 13, **characterised in that** the securing projection (6) is arranged on the elongate leg (7).

15. Connecting element (1, 1') according to either of claims 13 or 14, **characterised in that** the elongate leg (7) forms a supporting surface (7b) which is widened with respect to the retaining sections (2b, 3b).

## Revendications

1. Elément de liaison (1, 1') pouvant être accroché sur une chaîne (10) en vue d'une liaison avec un autre élément de liaison (1, 1') dans une position relative unique, comportant deux appendices de retenue (2, 3) délimitant une ouverture de réception (4), qui présente respectivement une section de guidage (3a, 4a) contiguë à une fente d'introduction (5) débouchant dans l'ouverture de réception (4) et une section de retenue (2b, 3b) délimitant l'ouverture de réception (4) dans ou contrairement à un sens de charge (F), **caractérisé en ce qu'**au moins un des appendices de retenue (2, 3) comporte une section de pivotement (3c) agencée entre section de retenue (2b, 3b) et section de guidage (2a, 3a), dans le secteur de laquelle une surface périphérique (U) de l'élément de liaison (1, 1'), qui est formée par une surface extérieure, détournée de l'ouverture de réception, de l'élément de liaison (1, 1'), est décalée en direction de l'ouverture de réception.

2. Elément de liaison (1, 1') selon la revendication 1, **caractérisé en ce que** la section de pivotement (3c) présente un aplatissement (3d) au niveau d'un côté détourné de l'ouverture de réception (4).

3. Elément de liaison (1, 1') selon la revendication 2, **caractérisé en ce que** la section transversale de l'appendice de retenue (2, 3) diminue le long de l'aplatissement (3d).

4. Elément de liaison (1, 1') selon la revendication 2 ou 3, **caractérisé en ce que** l'aplatissement (3d) s'éloigne de la fente d'introduction (5) parallèlement à un plan de charge (L) .

5. Elément de liaison (1, 1') selon la revendication 2 ou 3, **caractérisé en ce que** l'aplatissement (3d) s'éloigne de la fente d'introduction (5) de manière oblique en direction d'un plan de charge (L).

6. Elément de liaison (1, 1') selon l'une quelconque des revendications 1 à 5, **caractérisé en ce que** le au moins un appendice de retenue (3) est muni d'un étagement (8), entre section de pivotement (3c) et section de retenue (3b) au niveau d'un côté détourné de l'ouverture de réception (4), le long duquel la section transversale de l'appendice de retenue (3) s'agrandit en direction de la section de retenue (3b).

7. Elément de liaison (1, 1') selon l'une quelconque des revendications 1 à 6, **caractérisé en ce que** le au moins un appendice de retenue (3) est muni d'un épaississement (3f) au niveau de son extrémité tournée vers la fente d'introduction (5).

8. Elément de liaison (1, 1') selon l'une quelconque des revendications 1 à 7, **caractérisé en ce que** la section transversale d'au moins une section de guidage (2a, 3a) est convergente en direction de la fente d'introduction (5).

9. Elément de liaison (1, 1') selon l'une quelconque des revendications 1 à 8, **caractérisé en ce que** la au moins une section de guidage (2a, 3a) est munie unilatéralement d'une surface de guidage (2c, 2c', 3e) allant vers la fente d'introduction (5).

10. Elément de liaison (1, 1') selon la revendication 9, **caractérisé en ce que** la surface de guidage (3e) de la section de guidage (3a) forme avec le plan de charge (L) un angle d'environ 45°.

11. Elément de liaison (1, 1') selon l'une quelconque des revendications 1 à 10, **caractérisé en ce que** l'ouverture de réception (4) présente une section d'accrochage (4a) destiné à recevoir un élément d'accrochage (9) d'une chaîne (10) et une section de couplage (4b) destiné à recevoir un autre élément de liaison (1, 1'), une extension de sécurité (6) s'étendant entre section d'accrochage (4a) et section de couplage (4b) dans l'ouverture de réception (4).

12. Elément de liaison (1, 1') selon la revendication 11, **caractérisé en ce que** l'extension de sécurité (6) est munie d'une surface oblique (6a) tournée vers la section de couplage (4b).

13. Elément de liaison (1, 1') selon l'une quelconque des revendications 1 à 12, **caractérisé en ce qu'**un flanc longitudinal (7) est agencé entre les appendices de retenue (2, 3).

14. Elément de liaison (1, 1') selon l'une quelconque des revendications 11 à 13, **caractérisé en ce que** l'extension de sécurité (6) est agencée au niveau du flanc longitudinal (7).

15. Elément de liaison (1, 1') selon l'une quelconque des revendications 13 ou 14, **caractérisé en ce que** le flanc longitudinal (7) forme une surface d'appui (7b) élargie par rapport aux sections de retenue (2b, 3b).
